# EUROPEAN PATENT SPECIFICATION

(11) **EP 1 884 959 B1**
(45) Date of publication and mention of the grant of the patent: **14.09.2011**
(21) Application number: 06118158.2
(22) Date of filing: 31.07.2006
(51) Int. Cl.: G21K 4/00, C09D 4/06

(54) **Phosphor or scintillator screens or panels having a topcoat layer.**
Leucht- oder Szintillatorschirme bzw. -tafeln mit einer Deckschicht
Panneaux ou écrans phosphorescents ou scintillants avec une surcouche

(43) Date of publication of application: 06.02.2008
(73) Proprietor: Agfa HealthCare NV, 2640 Mortsel (BE)
(72) Inventor: Williamson, Alexander AGFA-GEVAERT, 2640, Mortsel (BE); Tioni, Estevan AGFA-GEVAERT, 2640, Mortsel (BE); Heylen, Kristof AGFA-GEVAERT, 2640, Mortsel (BE)
(74) Representative: Theunis, Patrick

(56) References cited:
- EP-A- 0 510 754
- EP-A- 0 522 609
- US-A- 4 298 650
- US-A- 4 741 993
- US-A- 4 893 021
- US-A- 5 432 351
- US-A- 6 046 269
- US-A- 6 120 902
- DATABASE WPI Section Ch, Week 200217 Derwent Publications Ltd., London, GB; Class A12, AN 2002-125526 XP002394752 -& JP 2001 201851 A (ASAHI KASEI KOGYO KK) 27 July 2001 (2001-07-27)
- DATABASE WPI Section Ch, Week 198813 Derwent Publications Ltd., London, GB; Class A11, AN 1988-087274 XP002394751 -& JP 63 037169 A (COLOUR CHEM KOGYO K) 17 February 1988 (1988-02-17)
- DATABASE WPI Week 199438, Derwent Publications Ltd., London, GB; AN 1994-308085 & JP 06 236028 A (MITSUBISHI RAYON CO LTD) 23 August 1994

## Description

### FIELD OF THE INVENTION

The present invention relates to a phosphor or scintillator screen or panel with a photo or electron beam cured top coat showing no cracking or cracks at its outermost surface, as a consequence of any treatment, including any cleaning of said surface.

### BACKGROUND OF THE INVENTION

A well-known use of phosphors is in the production of X-ray images. In a conventional radiographic system an X-ray radiograph is obtained by X-rays transmitted image-wise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

According to another method of recording and reproducing an X-ray pattern as disclosed e.g. in US-A 3,859,527 a special type of phosphor is used, known as a photostimulable phosphor, which being incorporated in a panel, is exposed to an incident pattern-wise modulated X-ray beam and as a result thereof temporarily stores energy contained in the X-ray radiation pattern. At some interval after exposure, a beam of visible or infra-red light scans the panel to stimulate the release of stored energy as light that is detected and converted to sequential electrical signals which can be processed to produce a visible image. For this purpose, the phosphor should store as much as possible of the incident X-ray energy and emit as little as possible of the stored energy until stimulated by the scanning beam. This imaging technique is called "digital radiography" or "computed radiography".

In both kinds of radiography it is preferred to be able to choose the phosphor that will be used on the basis of its speed and image quality in a layer arrangement without having to bother about problems arising from wear and tear of topcoat layers covering said phosphor, due to any mechanical or chemical impact.

As is well-known to anyone skilled in the art, CR screens are, in general, used in cassette based systems. More in particular they are exposed in light-tight cassettes to receive and store the image. Next, they are introduced in a digitizer for scanning. In the digitizer, the cassette is opened and the CR screen is taken out. In the scanning process, the screen is transported in the scanner. For transport of flexible screens, rigid rollers are used. In order to guarantee smooth and reliable transport, the rollers must exert some pressure on the screen. Hard and/or sharp dust particles may be present on the surface of the rollers. If this is the case, the CR screen will be damaged in the handling process in the digitizer, if it is not sufficiently scratch-resistant. In the transport process, flexible CR screens are bent. As a consequence, the layers making up the screen must be sufficiently elastic to avoid cracking or delamination.

In the digitizer, dust may accumulate, which can be deposited onto the CR screen during scanning and erasing. The presence of dust on the CR screen during X-ray exposure leads to image artefacts. Therefore, the screens must be cleaned by the radiographers on a regular basis.

Since CR screens are very expensive articles, they should, at least, have a long lifetime, i.e. it is important that they are well protected to avoid damage in the digitizer during scanning. In addition, it must be possible to clean the CR screens with cleaning fluids in an efficient way without causing damage. In order to improve the mechanical and chemical stability of the CR screens, a top-coat is applied on top of the active layer containing the storage phosphor, for mechanical protection and for protection against the cleaning fluids that often contain an alcohol.

The top-coat always causes degradation of the image quality to some extent. Light-piping in the top-coat results in a reduction of resolution in the image. Moreover the surface properties of the top-coat may, in addition thereto, lead to increased noise, especially in images that are made at high X-ray doses. Therefore, an important criterion in the selection of the top-coat material is its impact on image quality and, more particularly, its impact on resolution and screen-structure noise.

Poly-methyl-methacrylate (PMMA) has been found to be a promising material for the top-coat as it provides an abrasion resistant, cleaning fluid-resistant protection layer which has little negative impact on the image quality of the phosphor screen, and as it can easily be applied by coating from solvent by e.g. doctor blade coating or bar coating.

Examples of such protective PMMA layers in diverse applications, comprising semiconductor-technology, have been described e.g. in DE-A 42 29 192, in JP-A's 2001-073141 and 2001-081566, in US-A's 5,479,430 and 5,569,497 and in US-Application 2005/260393. Very specific structure types have e.g. been described in US-A 6,770,421. Coating of compositions from aqueous solutions, wherein acrylates are present, have e.g. been described in US-Application 2004/0180226.

In JP-A 2001-201851, as a photopolymerizable resin composition having good sensitivity, resolution, resist line forming property and resist peelability and developability with an alkaline aqueous solution, a photopolymeri-sable resin composition is provided, comprising in an amount of 1-50 wt % a photopolymerisable polyfunctional unsaturated compound wherein 1, 2 or 3 oxyethylene groups may appear. In EP-A 0 522 609 polyethyleneglycol diacrylates are mentioned as suitable di-functional monomers in order to provide a coating composition suitable for forming an adhesive primer layer on a hydrophobic resin support as, e.g., a polyethylene terephthalate support, which coating composition can be coated without solvents to be removed by drying the coated layer, and wherein said primer layer forms an excellent bond with phosphor binder layers of luminescent articles such as X-ray conversion screens. US-A 4,298,650 offers the advantageous combination of properties of the screens of US-A 4,188,449 (which do not require protective overcoats or curl control layers, and which are manufactured by a simple, inexpensive and easily controlled process which can be carried out at high coating speeds), as additionally exhibiting solubility in common solvents in order to facilitate recovery of the phosphor from coating scrap. As a second essential ingredient of the heat-curable component of the coating composition of that invention a polymerizable acrylic monomer is provided, and tetraethylene glycol diacrylate and tetraethylene glycol dimethacrylate are mentioned as typical examples of polyfunctional acrylic monomers. Polyethyleneglycol diacrylates are moreover mentioned in EP-A 0 510 754 as suitable di-functional monomers in a radiation curable composition of a resin binder applied in a protective coating of a phosphor screen having an embossed structure, in order to protect the phosphor layer against mechanical and chemical damage. In US-A 6,120,902 same polyethyleneglycol diacrylate is mentioned in a protective coating applied to a phosphor layer from a liquid protective radiation-curable coating composition that does not penetrate substantially into that phosphor layer and is hardened therein, while still making it possible to recover the phosphor to a large extent by dissolving its binder. In JP-A 63-037169 a UV-curable binder composition having improved adhesivity, curing rate and strength of surface coating film is provided by making use of an acrylic acid ester modified with an acrylamide methyl cellulose ester in place of cellulose acetate ester. In order to accomplish the elongation of lifetime of a radiation image storage panel a further improvement with respect to the humidity resistance, i.e., reducing the water vapor permeability of a protective layer. US-A 4,741,993 moreover discloses compounds which are preferably pre-polymers and/or olygomers having two or more double bonds, that may further contain a monomer (vinylmonomer) having unsaturated double bond as a reactive diluent. As a reactive diluent effecting to reduce the viscosity of the composition and enhance the radiation-curing rate, di-functional monomers as polyethyleneglycol diacrylate may be applied. In such a coating liquid for the protective layer, a binder which is not cured by irradiation or heating may be optionally contained as e.g. an included cellulose ester. US-A 4,893,021 discloses a photographic film pack assembly comprising a plurality of layers of photo-sensitive material and a plurality of layers of fluorescent material sensitive to such penetrating radiation arranged so that each said photo-sensitive layer faces a fluorescent layer, wherein phosphors are dispersed in an organic high molecular weight polymer binder as, e.g., cellulose nitrate, ethylcellulose, cellulose acetate, polyvinyl acetate, polystyrene, polyvinyl butyral, polymethyl methacrylate. Cellulose triacetate protective layers are further known from the examples in US-A 5,432,351, wherein as organic polymer binders in the phosphor layers of the intensifying screens polymer binders such as polyvinylbutyral, polyvinylacetate, nitrocellulose, ethylcellulose, vinylidene-chloride-vinylchloride copolymer, polymethylmethacrylate, polybutylmethacrylate, vinylchloride-vinylacetate copolymer, polyurethane, cellulose acetate butyrate and polyvinyl alcohol are mentioned.

Standard screen cleaners, used in order to remove dust and dirt after use of a screen, often contain large amounts of ethanol or other alcohols. A problem which is however observed with a PMMA top-coat in that, after cleaning with screen cleaner and storage for several hours, followed by bending, small cracks in the coating are formed. Further bending of such screens or panels intensifies cracking and appearance of scratches, due to handling of the screens before and after exposure in particular.

It is thus highly desired to provide screens or panels, be it for use in direct radiography as for scintillator panels or in computed radiography as for phosphor panels, that are flexible and/or that show no scratches that may disturb image representation by defects at the surface, and more in particular that show no crack formation in the outermost topcoat due to handling, and cleaning procedures after frequent re-use.

### OBJECTIVES AND SUMMARY OF THE INVENTION

It is an objective of the present invention to provide a phosphor or scintillator screen, plate or panel with an additive which improves flexibility of the top-coat while maintaining good abrasion or scratch resistance and ability to be frequently cleaned.

The above mentioned objectives have been realised by providing a photo-curable composition having the specific features defined in the corresponding independent claim 1, by curing a coatable formulation of said photo-curable composition in order to provide a phosphor or scintillator screen or panel having the desired properties as envisaged.

Specific features for preferred embodiments of the present invention are disclosed in the dependent claims.

Further advantages and specific embodiments of the present invention will become apparent from the following description and from the examples.

### DETAILED DESCRIPTION OF THE INVENTION

In order to attain the objectives of the present invention it is preferred to make use of a polymerisable additive which can be cross-linked by UV or EB curing, in order to avoid that the additive is extracted by cleaning with a screen cleaning solution, further showing no disadvantages such as a lowered abrasion resistance or increased appearance of scratches.

It has been found now that (meth)acrylates of a well-defined structure, i.e. curable (meth)acrylate type monomers with more than one (meth)acrylate group per monomer molecule and two or more ethyleneoxy groups per (meth)acrylate group in said monomers, when formulated as an additive for PMMA and coated as an outermost layer or topcoat onto a phosphor screen or scintillator panel, followed by UV or EB curing, result in a remarkable improvement with respect to resistance to cracks.

It is thought that a (meth)acrylate functionality of more than one in the monomers leads to a cross-linked structure, thereby enhancing the strength of the coating, and that presence of two or more ethyleneoxy group per (meth)acrylate group imparts flexibility by means of long flexible linking groups between the (meth)acrylate groups. Such an ethylene oxy group is known by anyone skilled in the art as having a structure in form of -CH₂CH₂O- units in the chain structure of the polymer.

The photo-or electron beam curable composition thus comprises a polymer or copolymer in combination with a (meth)acrylate type monomer with more than one (meth)acrylate group per monomer molecule and two or more ethyleneoxy groups per (meth)acrylate group in said monomer.

In the photo- or electron beam curable composition the polymer is polymethyl methacrylate or a copolymer thereof.

Said photo- or electron beam curable composition is advantageously applied from a solvent mixture having less than 20 wt% of water, as presence of water in excessive amounts in a coating solution is detrimental for use as a solvent when coming into contact with phosphors, coated in a phosphor layer. This is especially the case when said phosphors have an alkali metal halide based composition, known as being very sensitive to humidity or moisture.

In order to allow the photo-curable composition to be curable, e.g. with UV radiation, said composition essentially comprises a photoinitiating system, i.e. in form of a photo initiator.

For EB curing, no photoinitiating system is required.

The photo-curable composition is in form of a solution in order to provide a layer-forming formulation, providing ability to be coated. The screen or panel according to the present invention thus comprises a support and a phosphor or scintillator layer thereupon, wherein said phosphor or scintillator layer is covered with the layer-forming formulation disclosed hereinbefore, in form of a dried layer obtained after photo or electron beam curing.

According to the present invention, in favour of image sharpness, the said dried layer obtained after photo or electron beam curing has a thickness of at most 30 µm, preferably in the range from 1 µm to 15 µm, and even more preferably in the range from 2 µm to 6 µm.

According to the present invention, in said screen or panel, covered with the photo-cured or electron beam cured layer-forming formulation as set forth hereinbefore, said phosphor is a powder phosphor.

A phosphor screen or panel according to the present invention preferably has, as a phosphor composition a lanthanide activated alkaline earth metal fluorohalide type phosphor.

As a photostimulable or storage phosphor present in a screen or panel in form of a powder preferably has a BaFBr:Eu-type phosphor composition. In a particular embodiment thereof said phosphor is a Ba(Sr)FBr:Eu-type phosphor. In another embodiment a photostimulable storage phosphor screen or panel has as a storage phosphor in form of a powder a (Ba,Sr)F₁₊ₓX₁₋ₓ phosphor, wherein 0 < x < 0.1 and wherein X is one of Br or I or a combination thereof. Such a storage phosphor is advantageously prepared by a method comprising multiple firing steps and multiple milling steps, each firing step being followed by a milling step, and wherein each of said milling steps are performed in a continuous milling procedure, characterised in that at least said last milling procedure is performed at a milling rate higher than the former milling procedures. As a final step after a last thermal treatment step a last milling step is advantageously performed at a milling rate of not less than 8000 rpm further according to the method of the present invention said last milling step is performed by air-jet milling, i.e., preferably performed in an air-jet mill. Examples of the shape of powdery grains may include a rectangular parallelopipedon, a regular hexahedron, a regular octahedron, a tetradecahedron or a polyhedron as a general shape. In the steps before starting firing procedures, it is not excluded to make use of precipitation techniques as known from US-A's 6,531,073 and 6,638,447; from published US-Application 2006/108565 or from PCT-Application WO 2006/54532. It is moreover general knowledge that sharper images with less noise are obtained with phosphor particles of smaller mean or average particle size, but otherwise, it is well-known that light emission efficiency declines with decreasing particle size. Thus, the optimum mean or average particle size for a given application is a compromise between imaging speed and image sharpness desired. Until now preferred average grain sizes of the phosphor particles are in the range of 2 to 30 µm and more preferably in the range of 2 to 20 µm , in particular for BaFBr:Eu type phosphors. As in US-A 6,383,412 such a phosphor may have a grain size median diameter (Dm) in the range from 1 to 10 µm, a standard deviation on the average grain size of 50% or less for grains having a grain aspect ratio within the range of from 1.0 to 2.0. In dedicated applications like mammography, it is however recommended, in favor of screen-structure noise reduction in the plate to have a d₉₉ - expressing a grain size limit above which not more than 1% by weight of phosphor powder particles is present as derived from a phosphor weight distribution - smaller than 15 µm and, even more preferable, smaller than 10 µm as has been disclosed in EP-Application No. 05 109 076, filed September 30, 2005. The stimulable phosphor layer may be formed on a support by a known method. First, a stimulable phosphor and a binder are added into a solvent, and these substances are well mixed to thereby prepare a coating liquid having the stimulable phosphor uniformly dispersed in the binder solution. Although the ratio between binder and stimulable phosphor may vary depending on the desired characteristics of the radiographic image storage panel, the type of stimulable phosphor, and other factors, the weight ratio of binder to stimulable phosphor is generally selected from a range of from 1:1 to 1:100 and more preferably from a range of from 1:8 to 1:40. The coating liquid containing the stimulable phosphor and the binder, is then coated uniformly on the surface of a support to thereby form a coating film. This coating operation may be performed by using a conventional coating means such as a doctor blade, a roll coater and a knife coater, without however being limited thereto.

In another embodiment, in said screen or panel, covered with the photo-cured or electron beam cured layer-forming formulation, said phosphor is a needle-shaped phosphor. In a more particular embodiment, when said phosphor has been vapor deposited onto a support in a vapor depositing system by heating or by electron beam vaporization, said phosphor is a binderless phosphor.

In that case a radiation image phosphor or scintillator panel advantageously has a phosphor layer which comprises vapour deposited needle-shaped phosphor crystals composed of a matrix component and an activator. Said matrix compound is most generally represented by the formula (I)

M¹ X · aM²X'₂ · bM X"₃ (I)

wherein M¹ represents an alkali metal selected from the group consisting of Li, Na, K, Rb and Cs;
M² represents a divalent metal selected from the group consisting of
Be, Mg, Ca, Sr, Ba, Zn, Cd, Cu and Ni;
M³ represents a trivalent metal selected from the group consisting of Sc, Y, La, Ce, Pr, Nd, Pm, Sm, Eu, Gd, Tb, Dy, Ho, Er, Tm, Yb, Lu, Al, Ga and In; X, X' and X" each represent a halogen selected from the group consisting of F, Cl, Br and I; a and b each represent 0 ≤ a < 0.5 and 0 ≤ b < 0.5.

Raw materials suitable for use as matrix components preferably are alkali halide salt matrix component(s) and more preferably said alkali halide salt is CsX, wherein X represents Cl, Br, I or a combination thereof.

Activator components preferably are components having as activator element, an element selected from the group consisting of Eu, Tb, Bi, In, Ga, Cs, Ce, Tm, Dy, Pr, Ho, Nd, Yb, Er, Gd, Lu, Sm, Y, Tl, Na, Ag, Cu and Mg.

In a more particular embodiment thereof said vapour deposited needle-shaped phosphor is a photostimulable CsBr:Eu phosphor, as e.g. described in US-A 6,802,991.

Such a needle-shaped phosphor, arranged in a binderless layer, is manufactured by a vapour deposition method. As examples of vapour deposition methods, a physical vapour deposition method (PVD), a sputtering method, a chemical vapour deposition method (CVD), and vaporisation techniques like ion plating method and atomisation techniques like electron beam evaporation are well-known. In a method of preparing a radiation image storage panel said phosphor layer is coated onto a support by a technique selected from the group consisting of physical vapour deposition, chemical vapour deposition and an atomisation technique. As an atomisation technique, electron beam vaporisation can be used, as has e.g. been described in US-A's 6,740,897 and 6,875,990 and in US-Applications 2002/050570, 2004/075062 and 2004/149931. In the electron beam evaporation technique, an electron beam generated by an electron gun is applied onto the evaporation source and an accelerating voltage of electron beam preferably is in the range of 1.5 kV to 5.0 kV. By applying the electron beam technique, the evaporation source of matrix component and activator element is heated, vaporised, and deposited on the substrate. Physical vapour deposition techniques are particularly suitable for use in the deposition of binderless needle-shaped crystals in the phosphor layer of the present invention, such as resistive heating, sputtering and RF induction techniques. Resistive heating vacuum deposition, may advantageously be applied as has been described e.g. in US-A's 6,720,026; 6,730,243 and 6,802,991 and in US-Application 2001/007352. This technique is recommended as a method in order to vapour deposit the needle-shaped binderless storage phosphors for a panel according to the present invention. In the resistance heating evaporation, the evaporation sources are heated by supplying electrical energy to the resistance heating means: crucible or boat configurations - preferably composed of refractory materials - in a vapour deposition apparatus, in order to practically realise a homogeneous deposit of vapour deposited phosphor material may be applied as has e.g. been disclosed in US-Applications 2005/000411, 2005/000447 and 2005/217567.

Vapour deposition of a phosphor layer at high temperatures is performed as a process providing high phosphor packing densities, preferably in the range from 60% to 90%. Said vapour deposition process is advantageously performed in a vapour deposition chamber under low pressure by heating selected raw materials. As described in US-A 6,802,991 depositing of the europium doped cesium halide phosphor on a substrate has been performed by a method selected from the group consisting of physical vapour deposition, chemical vapour deposition or an atomisation technique, like e.g. electron-beam deposition or plasma chemical vapour deposition. Besides controlling vapour pressure (e.g. under medium vacuum in the range from 0.05 to 10 Pa as in US-A 2005/0077478 or at a pressure in the range of 0.3 to 3 Pa in the presence of an inert gas as e.g. argon or nitrogen as in US-A 2004/149929 or even to a pressure of less than 0.01 Pa as in US-A 6,802,991) and substrate temperature as in that US-A 6,802,991; and also as has been set forth in US-A 6,720,026 wherein the support has been cooled before the vapour stream causes deposition of vaporised phosphor onto the support, it is recommended that the evaporation source has a water content of not more than 0.5 wt%, as has been set forth in US-A 2003/113,580. Vapour deposition in a vacuum deposition apparatus as in the present invention thus requires adjustment of a predetermined degree of vacuum. For a binderless needle-shaped storage phosphor layer in a panel according to the present invention, formation of said phosphor under a high vacuum is desirable: the degree of vacuum of 1 x 10⁻⁵ to 5 Pa, and, more specifically, from 1 x 10⁻² to 2 Pa is desired, wherein an inert gas, such as an Ar or Ne noble gas, or alternatively, an inert gas as nitrogen gas, may be introduced into the vacuum deposition apparatus. Evacuation in order to give an even lower inner pressure of 1 x 10⁻⁵ to 1 x 10⁻² Pa is more preferred for electron beam evaporation. Introduction of oxygen or hydrogen gas may be advantageously performed, more particularly in order to enhance reactivity and/or e.g. in an annealing step. Introduction of an inert gas can moreover be performed in favour of cooling the vapour stream before deposition onto the titanium (alloy) substrate and/or the substrate, whereupon phosphor vapour raw materials should be deposited as disclosed in US-A 6,720,026. Alternatively one side of the support may be heated while the other side may be cooled while performing vapour deposition as disclosed in US-A 7,029,836.

The process of vacuum vapour deposition, may comprise the steps of heating to vaporise an evaporation source comprising a phosphor or its starting raw materials by means of a resistance heater or an electron beam, and depositing and accumulating the vapour on a substrate such as a metal sheet to form a layer of the phosphor in the form of columnar crystals in one binderless layer. As described in US-A 2004/0149929 or in US-A 2006/0054862 multiple prismatic stimulable phosphor crystal layers standing at the phosphor matrix compound layer or an amorphous crystal layer standing upon and having the same composition as the stimulable phosphor may be deposited. Multivapour deposition may be preferred because the vaporisation rate of each source can be independently controlled in that case, in order to incorporate the activator uniformly in the matrix, even if the compounds have very different melting points or vapour pressures. According to the composition of the desired phosphor, each evaporation source may contain the matrix compound or the activator compound only or a mixture thereof, optionally in the presence of additives if required. Three or more sources may even be used. For example, in addition to the above-mentioned sources, an evaporation source containing optional additives may be used. In the case wherein a phosphor layer is formed by multi-vapour deposition or co-deposition, at least two evaporation sources are used: one of the sources contains a matrix compound of the phosphor, while the other contains an activator compound. The multi-vapour deposition is preferred in cases wherein the vaporisation rate of each source should be independently controlled in order to incorporate the activator in a more uniform way in the matrix as is the case when said compounds have very different melting points or vapour pressures. According to the composition of the desired phosphor, each evaporation source may consist of the matrix compound or the activator compound only or otherwise may be a mixture thereof with additives. Three or even more sources may thus be used. The matrix compound of the phosphor may be either the matrix compound itself or a mixture of two or more substances that react with each other to produce the matrix compound. The activator compound generally is a compound containing an activating element, and hence is, for example, a halide or oxide of the activating element as e.g. described in US-A 2005/0133731. The temperature of the substrate generally is kept in the range of from 20°C to 350°C., preferably in the range of 100°C to 300°C and even more preferred between 150°C and 250°C. The deposition rate, which means how fast the formed phosphor is deposited and accumulated on the substrate, can be controlled by adjusting the electric currents supplied to the crucible heaters in the vapour depositing apparatus. The deposition rate generally is in the range of 0.1 to 1,000 µm/min, preferably in the range of 1 to 100 µm/min. It is not excluded to perform a pretreatment to the support, coated with the sublayer as in the present invention: in favour of an enforced drying step, the layer arrangement before phosphor deposition may be held at a high temperature during a defined time. It is even not excluded to increase the percentage of relative humidity until the surface of the sublayer starts hydrating, in order to get a smooth base for the phosphor layer. Efficient deposition of the storage phosphor layer onto the substrate however, requires temperatures for the substrate in the range from 50°C to 250°C as disclosed in US-Application 2004/081750. Heating or cooling the substrate during the deposition process may thus be steered and controlled as required.

After the deposition procedure is complete, the deposited layer is preferably subjected to heat treatment or annealing procedure, which is carried out generally at a temperature of 100 to 300°C for 0.5 to 3 hours, preferably at a temperature of 150 to 250°C for 0.5 to 2 hours, under inert gas atmosphere which may contain a small amount of oxygen gas or hydrogen gas. Annealing procedures may be applied as described in US-A 6,730,243; 6,815,692 and 6,852,357 or in US-Applications 2004/0131767, 2004/0188634, 2005/0040340 and 2005/0077477.

In the screen or panel according to the present invention said phosphor is a photostimulable phosphor as applied in CR techology. The photostimulable screen or panel is coated onto a so-called "powder image phosphor" or "PIP" screen (preferably coated with europium doped barium fluorobromide phosphor particles) or onto a "needle image phosphor" plate also called "NIP" screen (preferably coated by vapour deposition with CsBr:Eu needle-shaped crystals). Said needle-shaped crystals present in a binderless layer may be scraped off from the support whereupon vapor deposition has been applied, optionally milled in order to reduce the length of the needles (normally in the range from 100 up to 1000 µm), and coated after having been dispersed in a binder and forming a pseudo-PIP screen.

In the method of curing a layer-forming formulation according to the present invention, curing proceeds by ultra-violet radiation or by electron beam curing.

Moreover in the method according to the present invention, curing proceeds by ultra-violet radiation or by electron beam curing. More in particular curing proceeds after coating said layer-forming formulation as a protective coating upon a phosphor layer or scintillator layer present on a support, followed by drying.

In the method according to the present invention, said coating is performed by doctor blade coating or by bar coating.

Embodiments for the layer arrangement of the phosphor or scintillator screen, plate or panel are selected from following.

The layer arrangement of the screen or panel is normally so that, coated upon a support layer, there is an intermediate layer between support and phosphor layer (such as parylene as disclosed in US-A 2004/0051441 and US-A 2004/0051438 or another, e.g. dye-containing layer as in US-A 6,927,404) wherein such a parylene layer may also be present between phosphor layer and outermost protective layer or topcoat as in US-A 6,710,356 or as described in US-A 6,822,243. A good adhesion between the two protective layers is advantageously provided when use is made of a phosphoric acid ester compound as disclosed in US-A 2005/0067584. The parylene layers mentioned above are particularly recommended to be applied as layers protecting the phosphor or scintillator from moisture, as is appreciated well when use is made of alkali metal halide scintillators or phosphors, known as being very sensitive to humidity of the environment.

The support can be any support known in the art: any solid of an organic or inorganic nature, which can assume any geometrical shape, such as foils, fibers (e.g. carbon fiber reinforced resin sheets and more particularly sheets, each of which includes carbon fibers arranged in a direction and impregnated with a heat resistant resin such that directions of the carbon fibers in the carbon fiber reinforced resin sheets are different from each other), and particles can be used. As an inorganic non-metallic support chemically reinforced glass or crystallised glass can be used. Inorganic metallic supports, suitable for use are, e.g. metal substrates such as those of aluminum, titanium, lead, iron, copper, steel, molybdenum, beryllium; supports of metallic and non-metallic oxides such as those of aluminum, titanium, lead, copper, beryllium, manganese, tungsten, vanadium, and silicon oxides.

As an organic support a polyimide sheet, epoxy compounds and thermoplastic and thermosetting compounds of different compositions, polyether, polyester and polycarbonate compositions may be used, without however being limited thereto. It is recommended to subject the support to cleaning procedures as to washing and degreasing before applying a protective layer unit or arrangement as set forth above.

According to the present invention a panel is preferred, wherein the phosphor layer is a photostimulable phosphor layer, also called "storage phosphor layer". This does not mean that the conventionally known prompt emitting phosphor layers in intensifying screens as well as scintillators in scintillator panels may not take profit form the topcoat according to the present invention, as those panels are also sensitive to mechanical damage and to organic cleaning solutions.

When a storage phosphor screen with a topcoat layer has protruding beads it is important that the beads do not touch mechanical parts of the scanner and that this is true even when the storage panel shows some wobble during transport in the scanner. Therefore beads when used as spacing particles in a storage phosphor screen of the present invention preferably have a median volume diameter, dᵥ₅₀, so that 0.5 µm ≤ dv50 ≤ 25 µm and a median numeric diameter, dₙ₅₀, so that 0.1 ≤ dᵥ₅₀/dₙ₅₀ ≤ 1.20. Further the beads are preferably adapted to the thickness, t, of the layer B on the storage panel of the present invention so that said polymeric beads have a median volume diameter, dᵥ₅₀, wherein 0.25 ≤ dᵥ₅₀/t ≤ 4.0.

A phosphor panel of the present invention can be a self-supporting panel as well as a panel comprising a support. This support can be any support known in the art, but in view of the desired high humidity resistance of the screens, a support with very low water vapour permeability is preferably used. A preferred support is a support of anodised aluminium and the supports as disclosed in US-A 6,815,095 and US-Application 2003/0134087.

In a particular embodiment of the present invention the surface of the phosphor layer is smaller than the surface of the support so that the phosphor layer does not reach the edges of the support. Thus a panel with a support having a surface larger than the main surface of the phosphor layer, so that the phosphor layer leaves a portion of the support free, and wherein the protective layer comprising layer A and topcoat layer B covers at least in part the portion of the support left free by the phosphor layer represents a particular embodiment of the present invention as already disclosed hereinbefore. An advantage of such a construction resides in the fact that the edges of the phosphor layer do not touch mechanical parts of the apparatus and are thus less easily damaged during use of the panel, more particularly e.g. during transport in the scanner. Another advantage of this construction is that no special edge reinforcement is necessary (although, if desired, further edge reinforcement can be applied). Although a construction of a phosphor panel wherein the surface of the phosphor layer is smaller than the surface of the support, so that the phosphor layer does not reach the edges of the support, represents a specific embodiment of the present invention, such a construction can be beneficial for the manufacture of any phosphor panel covered with any protective layer known in the art.

In the case wherein between the support material and the phosphor layer a parylene layer is present, the surface roughness of the covered support shows a better smoothness as surface roughness decreases (preferably 0.5 or less and even more preferably 0.1 or less), as described in US-A 2004/0051438 which may be in favour of depositing columnar crystals or needles having smaller diameters, thereby leading to an improved packing density of the said needles per square unit of the surface area of the vapour deposited photostimulable phosphor layer and improved sharpness or image definition. More details about dimensions of such columnar, needle-shaped or cylindrical phosphors have been disclosed in US-A 6,967,339.

An advantage of this invention relative to using UV/EB curable monomers or mixtures of monomers which do not contain a polymer such as PMMA, is that the coated material is not fluid or sticky after drying, meaning that the phosphor coating can be rolled up for transportation before the UV/EB curing step.

As a advantageous effect of the present invention the physical stability of the phosphor or scintillator imaging plates has been proved to satisfy the most stringent requirements, in that the image quality is not changed over a long period of frequent use and re-use.

### Examples

While the present invention will hereinafter be described in connection with preferred embodiments thereof, it will be understood that it is not intended to limit the invention to those embodiments.

Products used in experiments were:
(1) Elvacite 2041 = High molecular weight polymethylmethacrylate, commercially available from Lucite International 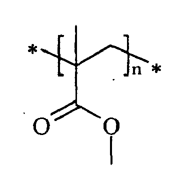
(2) (A1) CN435. Ethoxylated(15) trimethylolpropane triacrylate, commercially available from Sartomer 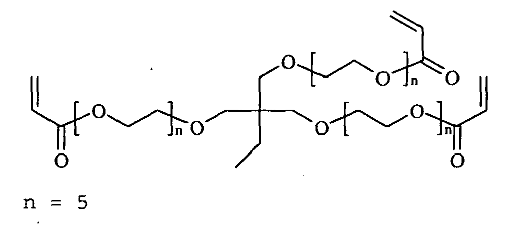
(3) (A2) SR344. Polyethyleneglycol(400) diacrylate, commercially available from Sartomer 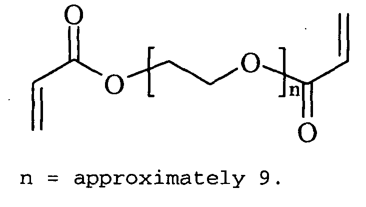
(4) (A3) SR610. Polyethyleneglycol(600) diacrylate, commercially available from Sartomer 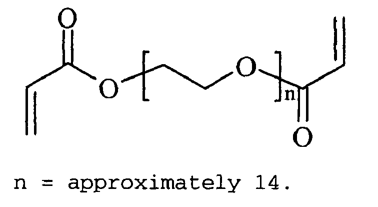
(5) (A4) SR454. Ethoxylated(3) trimethylolpropane triacrylate commercially available from Sartomer 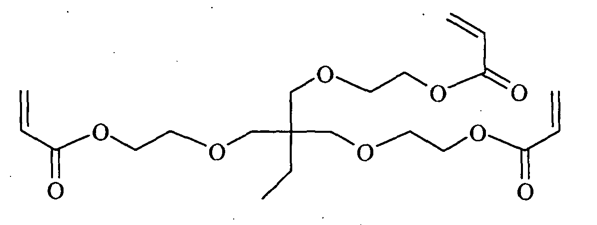
(6)(A5) SR256. 2(2-ethoxyethoxy)ethyl acrylate, commercially available from Sartomer. 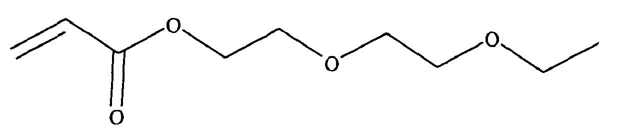
(7) (A6) SR508. Dipropyleneglycol diacrylate, commercially available from Sartomer 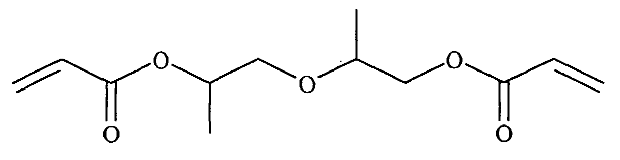
(8) (A7) SR349. Ethoxylated(3) bisphenol A diacrylate, commercially available from Sartomer. 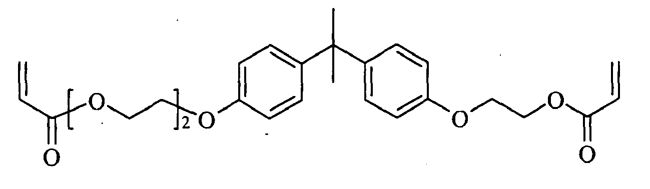
(9) (A8) SR238. Hexanediol diacrylate, commercially available from Sartomer 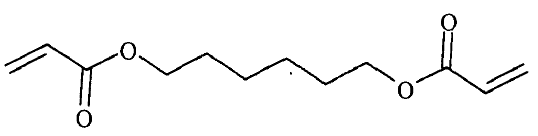
(10) (A9) Pentaerythritol triacrylate, commercially available from Aldrich

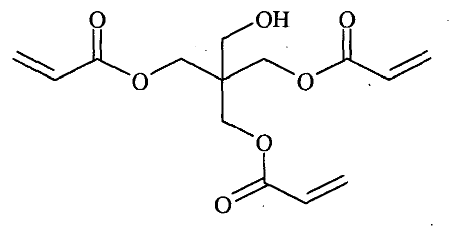

### Procedure for forming coating formulations and for the coating thereof

The formulations were made by adding together the components shown in the Table 1 and stirring until the solid components were dissolved in the solvent mixture.

**Table 1: Formulations for PMMA and PMMA/acrylate mixtures**

| Product | Formulation R1 (grams) | Formulations F1-F9 (grams) |
|---|---|---|
| MEK | 16.60 | 16.60 |
| MOP | 8.30 | 8.30 |
| Elvacite 2041 | 3.08 | 3.00 |
| Benzophenone | / | 0.08 |
| CN386 | / | 0.12 |
| Darocur 1173 | / | 0.12 |
| Acrylate Ax | / | 0.90 |
| % solids | 11.0 | 14.49 |

| | | |
|---|---|---|
| MEK = methylethyl ketone MOP = 1-methoxy-2-propanol CN386 = amine modified acrylate co-initiator, commercially available from Sartomer Darocur 1173 = photoinitiator, commercially available from Ciba-Geigy Acrylate Ax = acrylate A1 to A9 (see above structures). | | |

The solutions were coated with a doctor blade at a wet thickness of 150 microns onto a powder phosphor screen. The coatings were then dried in a ventilated oven at 70ºC for 30 minutes, allowed to cool to room temperature and then passed three times under a Technigraf UL00855 UV lamp with a belt at a speed of 3m/min.

The coatings were then treated with ethanol by rubbing the coatings 3x with a cotton pad soaked in ethanol. After allowing to dry and leaving overnight, the phosphor screens were bent round a metal cylinder with a diameter of 20mm, and then checked with a 20x magnifying glass for cracks.

The powder phosphor screen was prepared as follows, before being coated with the covering protective layers as described above.

### Preparation of the phosphor and the phosphor layer

Preparation of the photostimulable phosphor was performed as follows.

Ba 0.859 Sr 0.14 Eu 0.01 F 2 was prepared by adiabatic reaction of the appropriate amounts of BaCO₃, SrCO₃ and Eu₂O₃ in an aqueous dispersion with HF.

A raw mix was made by thoroughly mixing the following ingredients in the following proportions:

| | |
|---|---|
| Ba_{0.859}Sr_{0.14}Eu_{0.01}F₂: | 0.528 mole |
| BaBr₂: | 0.375 mole |
| BaI₂: | 0.095 mole |
| NH₄Br: | 0.045 mole |
| CsI: | 0.003 mole |
| PbF₂: | 0.0003 mole |
| Sm₂O₃: | 0.00025 mole |
| Eu₂O₃: | 0.00072 mole |

The phosphor was made in 3 firing steps:

### First firing step:

Three crucibles, each containing 165 g of raw mix were placed in a quartz tube, which was sealed with a flange having a gas inlet and a gas outlet with water lock. After flushing with N₂ for 15 minutes, the quartz tube was placed in a box furnace at 850°C. Dwell time in the furnace was 2 hours and the tube was flushed with N₂ at 1.5 1/min.

After that firing the tube was taken out of the furnace and left to cool for 30 minutes while being flushed with N₂. Next, the crucibles were taken out of the tube and the powder was deagglomerated with mortar and pestle.

The deagglomerated powder was milled on an Alpine AFG-100 air mill with three 3 mm nozzles, a milling chamber pressure of 3 bar and a wheel rotation rate of 3,500 r.p.m..

### Second firing step:

Three crucibles containing 230 g of first fired material each, were placed in a quartz tube, which was sealed with a flange having a gas inlet and a gas outlet with water lock. The quartz tube was immediately placed in a box furnace at 725°C. Dwell time in the furnace was 5.5 hours and the tube was flushed with N₂ at 1.5 1/min.

After that firing the tube was allowed to cool in the furnace to 450°C while being flushed with N₂. Next, the tube was opened, taken out of the furnace and allowed to cool further for 30'. The crucibles were taken out of the tube and the powder was deagglomerated with mortar and pestle.

The deagglomerated powder was milled again on an Alpine AFG-100 air mill with three 3 mm nozzles, a milling chamber pressure of 3 bar and a wheel rotation rate of 3,500 r.p.m..

Phosphors prepared in the above described way were used as starting material in order to prepare fine phosphor samples.

The fine phosphors were made by remilling (3rd milling), refiring in the same way as in the second firing and remilling (4th milling) on the Alpine AFG-100 air-jet mill.

3rd and 4th milling rates were 9.000 rpm.

The final fine particle size powder phosphor was seperately dispersed in a binder solution (see phosphor layer composition hereinafter).

| Phosphor layer composition: | |
|---|---|
| STANN JF95B (from SANKYO ORGANIC Chemicals Co. Ltd.) | 0.45 g |
| KRATON FG19101X (from Shell Chemicals) | 6.25 g |
| BaSrFBr:Eu | 150 g |

### Preparation of the phosphor layer:

STANN JF95B and KRATON FG19101X were dissolved while stirring in the prescribed amounts in 41.65 g of a solvent mixture from methylcyclohexane, toluene and butyl acetate in ratios by volume of 50:35:15. The phosphors were added thereafter and stirring was further proceeded for another 10 minutes at a rate of 1700 r.p.m.. Then the phosphor lacquer was given a ball-mill treatment during 1 min at 1700 r.p.m..

The composition was doctor blade coated at a coating rate of 2.5 m per minute and a thickness of 600 µm onto a subbed 175 µm thick polyethylene terephthalate support and dried at room temperature during 30 minutes. In order to remove volatile solvents as much as possible the coated phosphor plate was dried at 60°C in a drying furnace.

### Results

Results with respect to cracks in the topcoat layer are shown in Table 2.

**Table 2**

| Formulation | Acrylate type | Cracks |
|---|---|---|
| R1, comparison | None | Yes |
| F1, invention | CN435 | No |
| F2, invention | SR344 | No |
| F3, invention | SR610 | No |
| F4, comparison | SR454 | Yes (few) |
| F5, comparison | SR256 | Yes |
| F6, comparison | SR508 | Yes |
| F7, comparison | SR349 | Yes (few) |
| F8, comparison | SR238 | Yes |
| F9, comparison | Pentaerythritol triacrylate | Yes (many) |

As is clear from the data given in Table 2, coatings applied according to the present invention show the ability to be frequently cleaned, without being damaged by ethanol treatment and without showing cracks after bending. Moreover it has been established that a satisfactory scratch resistance was present.

It can be seen from these results that only with cured topcoats from formulations having a (meth)acrylate type monomer with more than one (meth)acrylate group per monomer molecule and two or more ethyleneoxy groups per (meth)acrylate group in said monomer, the objectives of the present invention were attained.

Having described in detail preferred embodiments of the current invention, it will now be apparent to those skilled in the art that numerous modifications can be made therein without departing from the scope of the invention as defined in the appending claims.

## Claims

1. Screen or panel comprising a support and a phosphor or scintillator layer thereupon, wherein said phosphor or scintillator layer is covered with a photo- or electron beam cured composition in form of a dried layer, obtained from a photo- or electron beam curable composition comprising a polymer or copolymer and a (meth)acrylate type monomer with more than one (meth)acrylate group per monomer molecule and two or more ethylene oxy groups per (meth)acrylate group in said monomer, **characterised in that** the said polymer or copolymer is polymethyl methacrylate or a copolymer thereof.

2. Screen or panel according to claim 1, wherein said dried layer has a thickness of at most 30 µm.

3. Screen or panel according to claim 1 or 2, wherein said phosphor is either a powder phosphor or a needle-shaped phosphor.

4. Screen or panel according to claim 1 or 2, wherein said phosphor is a binderless phosphor.

5. Screen or panel according to claim 1 or 2, wherein said phosphor is a photostimulable phosphor.

6. Method of manufacturing a screen or panel according to claim 1, wherein curing proceeds by ultra-violet radiation or by electron beam curing.

7. Method according to claim 6, wherein curing proceeds after coating a layer-forming formulation as a protective coating upon a phosphor layer or scintillator layer present on a support, followed by drying.

8. Method according to claim 7, wherein said coating is performed by doctor blade coating or by bar coating.

## Patentansprüche

1. Eine Folie oder ein Schirm, die bzw. der einen Träger und eine auf den Träger angebrachte Leuchtstoffschicht oder Szintillatorschicht umfasst, wobei die Leuchtstoffschicht oder Szintillatorschicht mit einer durch Belichtung oder Elektronenstrahl gehärteten Zusammensetzung in Form einer getrockneten Schicht beschichtet ist, wobei die getrocknete Schicht aus einer durch Belichtung oder Elektronenstrahl härtbaren Zusammensetzung, die ein Polymer oder Copolymer und ein Monomer des (Meth)acrylat-Typs mit mehr als einer (Meth)acrylatgruppe je Monomermolekül und zwei oder mehr Ethylenoxygruppen je (Meth)acrylatgruppe im Monomer enthält, erhalten wird, **dadurch gekennzeichnet, dass** das Polymer oder Copolymer Polymethylmethacrylat oder ein Copolymer von Polymethylmethacrylat ist.

2. Folie oder Schirm nach Anspruch 1, **dadurch gekennzeichnet, dass** die Stärke der getrockneten Schicht bei höchstens 30 µm liegt.

3. Folie oder Schirm nach Anspruch 1 oder 2, **dadurch gekennzeichnet, dass** der Leuchtstoff entweder ein Leuchtstoffpulver oder ein nadelförmiger Leuchtstoff ist.

4. Folie oder Schirm nach Anspruch 1 oder 2, **dadurch gekennzeichnet, dass** der Leuchtstoff ein bindemittelfreier Leuchtstoff ist.

5. Folie oder Platte nach Anspruch 1 oder 2, **dadurch gekennzeichnet, dass** der Leuchtstoff ein ausleuchtbarer Leuchtstoff ist.

6. Verfahren zur Herstellung einer Folie oder eines Schirms nach Anspruch 1, **dadurch gekennzeichnet, dass** die Härtung mittels Ultraviolettstrahlung oder Elektronstrahl erfolgt.

7. Verfahren nach Anspruch 6, **dadurch gekennzeichnet, dass** die Härtung anschließend an den Auftrag einer eine Schutzschicht bildenden Zusammensetzung auf eine auf den Träger angebrachte Leuchtstoffschicht oder Szintillatorschicht erfolgt, wonach eine Trocknung vorgenommen wird.

8. Verfahren nach Anspruch 7, **dadurch gekennzeichnet, dass** der Auftrag durch Rakelbeschichtung oder Stabbeschichtung erfolgt.

## Revendications

1. Un écran ou panneau constitué d'un support et d'une couche luminescente ou couche scintillante appliquée sur le support, ladite couche luminescente ou couche scintillante étant recouverte d'une composition sous forme de couche séchée, durcie par rayonnement ou par faisceau électronique, ladite couche séchée étant obtenue à partir d'une composition durcissable par rayonnement ou par faisceau électronique contenant un polymère ou copolymère et un monomère du type de (méth)acrylate comprenant plus d'un groupe (méth)acrylate par molécule monomère et au moins deux groupes éthylèneoxy par groupe (méth)acrylate contenu dans le monomère, **caractérisé en ce que** le polymère ou copolymère est du polyméthacrylate de méthyle ou un copolymère de polyméthacrylate de méthyle.

2. Ecran ou panneau selon la revendication 1, **caractérisé en ce que** la couche séchée présente une épaisseur maximale de 30 µm.

3. Ecran ou panneau selon la revendication 1 ou 2, **caractérisé en ce que** le luminophore est un luminophore sous forme de poudre ou un luminophore aciculaire.

4. Ecran ou panneau selon la revendication 1 ou 2, **caractérisé en ce que** le luminophore ne contient pas de liant.

5. Ecran ou panneau selon la revendication 1 ou 2, **caractérisé en ce que** le luminophore est un luminophore photostimulable.

6. Un procédé pour la fabrication d'un écran ou panneau selon la revendication 1, **caractérisé en ce que** le durcissement s'effectue par rayonnement ultraviolet ou par faisceau électronique.

7. Procédé selon la revendication 6, **caractérisé en ce que** le durcissement s'effectue après l'application d'une composition formant une couche protectrice sur une couche luminescente ou couche scintillante déjà appliquée sur un support, l'étape de durcissement étant suivie d'une étape de séchage.

8. Procédé selon la revendication 7, **caractérisé en ce que** l'application de ladite composition est réalisée par enduction par racle ou par enduction par barre.
